# EUROPEAN PATENT SPECIFICATION

(11) **EP 3 370 536 B1**
(45) Date of publication and mention of the grant of the patent: **19.04.2023**
(21) Application number: 16794967.6
(22) Date of filing: 03.11.2016
(51) Int. Cl.: A23C 9/15, A23C 9/156, A23C 9/152, A23C 9/142, A23C 13/12, A23C 13/14, A23C 1/00, A23C 1/16

(54) **METHOD OF MAKING CAPSULES WITH DAIRY CONCENTRATE FOR MILKY BEVERAGES**
VERFAHREN ZUR HERSTELLUNG VON KAPSELN MIT MILCHKONZENTRAT FÜR MILCHIGE GETRÄNKE
PROCEDE DE FABRICATION DE CAPSULES AVEC CONCENTRÉ LAITIER POUR LES BOISSONS LAITIÈRES

(30) Priority: 06.11.2015 GB 201519642
(43) Date of publication of application: 12.09.2018
(73) Proprietor: Koninklijke Douwe Egberts B.V., 3532 AD Utrecht (NL)
(72) Inventor: DEMMER, Thomas, 81737 Munich (DE)
(74) Representative: Boult Wade Tennant LLP
(86) International application number: PCT/EP2016/076494
(87) International publication number: WO 2017/076940

(56) References cited:
- US-A- 5 503 865
- US-A1- 2010 055 290
- US-A1- 2011 135 803
- US-A1- 2015 201 638
- PAVAN KUMAR ET AL: "Perspective of Membrane Technology in Dairy Industry: A Review", ASIAN-AUSTRALASIAN JOURNAL OF ANIMAL SCIENCES., vol. 26, no. 9, 1 September 2013 (2013-09-01), pages 1347-1358, XP055329545, KR ISSN: 1011-2367, DOI: 10.5713/ajas.2013.13082
- DATABASE GNPD [Online] MINTEL; 20 November 2015 (2015-11-20), anonymous: "Latte Macchiato", XP055702567, retrieved from www.gnpd.com Database accession no. 3558347

## Description

This disclosure relates to a method of producing a concentrated ingredient for providing milky beverages or the milky portion of a beverage, such as a Latte. In particular, the disclosure relates to a method for forming the ingredient from cream, without the risk of butter formation.

It is known to produce milk beverages from a milk concentrate and, indeed, the use of skimmed milk powders to whiten coffee beverages is commonplace. Such milk powders serve to provide a milk beverage on reconstitution with water and are often used in beverage preparation machines to provide a convenient source of milk for a consumer looking to reproduce café-style beverages at home. For example, it is known to provide beverage capsules containing a mixture of coffee powder and a milk powder which can be dissolved to provide a Latte beverage.

It is also known to provide a liquid dairy ingredient for use in such beverage preparation systems. For example, EP1676786 describes the use of a concentrated liquid milk ingredient which can be used to provide a milk beverage. In particular, it is an aim of EP1676786 to provide a foamed milk beverage and it was discovered that the use of a liquid ingredient encouraged foam production compared to a reconstituted powder ingredient.

WO2006/012506 and WO2012/033927 disclose the production of concentrated liquid concentrates for use in preparing beverages by dilution.

GB2212380 relates to a milk concentrate and a process for the preparation thereof.

US2013196031 relates to dairy mineral fortified liquid dairy products and methods of making said products.

US2010/055290 relates to a heat stable concentrated dairy liquid and cream product.

WO/2015/170164 discloses a method for forming a liquid dairy concentrate comprising providing a liquid dairy ingredient having a fat content of at least 35wt%; concentrating the liquid dairy ingredient by ultrafiltration and/or diafiltration to obtain a concentrated liquid dairy ingredient as the retentate; adding sucrose and/or trisodium citrate to form a modified retentate; blending the modified retentate with one or more further ingredients; and homogenising the blend to form a liquid dairy concentrate, wherein, during the step of blending the modified retentate with said one or more further ingredients, the retentate is at a temperature of at least 60°C. US 2015/201638 A1 also discloses a method of producing a liquid dairy concentrate.

Accordingly, it is desirable to provide an improved production method and/or tackle at least some of the problems associated with the prior art or, at least, to provide a commercially useful alternative thereto.

The solution provided by the present invention is defined by the appended claims.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

As will be appreciated, the size of a milk beverage produced from concentrated ingredients will depend on the extent to which the ingredients can be diluted without losing the desirable flavour. Accordingly, for capsules, such as those disclosed in EP1676786, it is necessary to tailor the size of the capsule to ensure that sufficient concentrate can be provided.

The present inventors have found that it would be desirable to provide a full sized milk beverage from a reduced amount of beverage concentrate. The inventors have now found that a milk-flavoured beverage can be provided by the dissolution of a cream-derived concentrate in a higher dilution than can be achieved with a milk-derived ingredient. However, the use of a more concentrated milk ingredient was found to be unduly process intensive and there was an increased likelihood for the high fat composition to form butter during processing.

The inventors have now found that several key steps can be taken which serve to prevent the formation of butter during the processing required to form a liquid dairy concentrate. Butter formation is extremely undesirable: if a product undergoes minor butter production even at any point in the process, the resulting beverages are darker, sweeter, and thinner. Generally a separation of oil will be visible if the dairy portion of the beverage is brewed independently of the coffee and may even be visible on coffee-containing beverages. Furthermore, the inventors have found that they can produce an improved concentrate with reduced cooked flavours by using the method described herein.

The disclosure relates to a method of producing a liquid dairy concentrate. In the context of the product produced by the method described herein, a concentrate is a composition suitable for mixing with an aqueous medium to form a beverage. That is, the concentrate would preferably not be a ready to drink formulation and would instead by consumed after dilution. The ratio of dilution would preferably be in an amount of from 5:1 and 9:1. For example, a 25g concentrate would preferably be diluted with between 125g and 225g of water to form a final beverage between 150 and 250g.

A "liquid" dairy concentrate or ingredient is one comprising sufficient water to be pumpable. The liquid dairy ingredient formed from the cream and MF milk for the present process will have a solids content in the range of from 30 to 55wt%. It will be appreciated that the liquid ingredient will be essentially a suspension of milk-derived fats and proteins.

A dairy ingredient is a food product produced from the milk of mammals, typically cows. Dairy ingredients typically take a number of forms including milk, cream, and butter. Milk products directly obtained tend to separate (or can be separated) into fractions depending on the relative fat content. In this way a cream layer may form on top of a milk and the fat contents will be at least 18wt% for the cream and less than 5.5wt% for the milk. Different fat levels can be achieved by concentrating and/or mixing milk and cream fractions.

The method comprises a number of steps. These can be carried out sequentially in a batch process or concurrently in a continuous process.

According to a first step, cream is mixed with micro-filtered milk (MF milk) to form a liquid dairy ingredient. Cream is a well known ingredient representing a high fat dairy ingredient. Microfiltered milk is also a well-known ingredient and is prepared using an extra fine filtration system, which prevents souring bacteria from passing through. It can also be used to increase the casein content of the milk. The Micro-filtered milk is available in whole, semi skimmed or skimmed milk varieties and is preferably used as skimmed milk.

The microfiltered milk is a source of milk proteins. Casein is a milk protein and is well known along with whey protein in dairy ingredients. Native micellular casein is casein provided in a form such that the casein has not been denatured and has formed micelles in solution. These are typically calcium micelles in view of the minerals present in milk. An ideal source of native micellular casein is concentrated milk, especially microfiltrated skimmed milk concentrates which are aqueous solutions and rich in casein. The use of microfiltrated milk helps to ensure that its casein is provided as native micelles.

The mixture of cream and microfiltered milk which form the liquid dairy ingredient has a fat content of 35 to 45wt%, and a fat to protein ratio of from 5:1 to 15:1 by weight. Preferably the liquid dairy ingredient has a fat to protein ratio of from 8:1 to 12:1, and preferably about 10:1. The fats present in the concentrate are preferably dairy fats. That is, fats which are derived from milk, rather than supplemented or added fat components. The ratio of fat to protein is important to ensure that the diluted beverage has realistic milk-like consistency and flavour. The levels of fat and protein which can be found in different dairy ingredients varies significantly by ingredient type and any processing that has been conducted. A cream ingredient will typically have a high fat content and a low protein content: for example, the protein content of a 40wt% fat-content cream may be in the region of 2-3wt%, of which 80wt% may typically be casein. The protein content of a 0.03wt% fat-content skimmed milk product, however, may be in the region of 8-10wt%, of which 90wt% may typically be casein. The inventors increase the levels of casein in a cream by mixing the cream and the milk concentrate (MF).

The second step involves concentrating the liquid dairy ingredient by ultrafiltration and, optionally, diafiltration, to obtain a concentrated liquid dairy ingredient as a retentate. The permeate will typically comprise water and soluble ingredients such as lactose. These process steps are preferably carried out to achieve a concentration of from 1.1 to 1.3 times.

Ultrafiltration is a well-known process in the art. Ultrafiltration (UF) is a variety of membrane filtration in which conditions, such as pressure or concentration gradients, lead to a separation through a semi-permeable membrane. Suspended solids and solutes of high molecular weight are retained in the so-called retentate, while water and low molecular weight solutes pass through the membrane in the permeate. Ultrafiltration is not fundamentally different from microfiltration, nanofiltration or membrane gas separation, except in terms of the size of the molecules it retains. Ultrafiltration in the present method is preferably carried out at an elevated temperature, preferably at least 40°C, preferably from 50 to 60°C and most preferably 50°C to 55°C.

Diafiltration is a well-known process in the art. Diafiltration is a dilution process that involves removal or separation of components (permeable molecules like salts, small proteins, solvents etc.,) of a solution based on their molecular size by using micro-molecule permeable filters in order to attain pure solution. In the treatment of the dairy ingredient, diafiltration is used to remove lactose from the dairy ingredient.

The advantage of the ultrafiltration and, optionally, diafiltration, of the cream and the MF milk is that the lactose content of these dairy ingredients is substantially reduced.

The retentate preferably has from 40 to 50wt% solids, and/or at least 38wt% fat and/or less than 1wt% lactose. The concentration step will preferably be carried out at a temperature of at least 50°C, preferably from 50 to 55°C.

The next step involves adding sucrose and/or trisodium citrate to form a modified retentate. This may be considered a slurry as it has high total solids. Preferably the step of adding sucrose and/or trisodium citrate to form a modified retentate is conducted at a temperature of at least 50°C, preferably from 50 to 55°C. The sucrose is typically added, preferably in granulated form, in an amount of from 10 to 40wt%, preferably 15 to 32wt%, more preferably 15 to 25wt% by weight of the modified retentate. Preferably this step involves only the addition of sucrose and not trisodium citrate.

After adding sucrose and/or trisodium citrate to form a modified retentate and before adding one or more further ingredients to the modified retentate to form a liquid dairy concentrate, the modified retentate is cooled to a temperature of at most 8°C (preferably in the range of from 5 to 8°C). That is, the retentate is cooled to a temperature of 8°C or colder. The modified retentate is stored at a temperature of at most 8 °C for at least 2 minutes and, preferably, for less than 24 hours. Preferably the modified retentate is stored for at least 30 minutes, preferably at least 1 hour at a temperature of at most at most 8°C. More preferably the modified retentate is stored for at most 72 hours, more preferably at most 24 hours, even more preferably at most 12 hours, at a temperature of at most 8°C (preferably in the range of from 5 to 8°C). The ability to hold the modified retentate for this time allows for process efficiencies with the performance of larger batch processes. It was found that it was possible to store the modified retentate under cold conditions without butter formation provided that either sucrose (granulated or powdered) and/or tri-sodium citrate had been added.

This storage of the modified retentate also allows bulk production which can then be used batchwise to make different flavours of final composition using the filling and retorting apparatus based on different recipes of added ingredients. Furthermore, it was surprisingly found that this cooling and holding step had a significant effect on the final beverage foam achieved. Without wishing to be bound by theory, it may be that there is an impact on the protein structures or the calcium mineral distribution which provides this advantageous effect.

The next step involves adding one or more further ingredients to the modified retentate to form a liquid dairy concentrate. The one or more further ingredients are selected to arrive at a desired final recipe. The further ingredients can be, for example stabilisers, flavours, sweeteners or fortifiers. For example, the further ingredients are preferably selected from buffers, stabilisers, flavourings, minerals, sucrose, and protein, such as protein powders, including whey powder.

The inventors have preferred to use a dairy mineral product to supplement the nutritional value of the concentrate. As a component of dairy mineral product there is often an amount of lactose included. While this increases the lactose content in the product, all other elements of the final recipe being the same, the total lactose content is lower for the method disclosed herein compared to that of WO-A-2015170164.

The liquid dairy concentrate may contain one or more stabiliser, such as gum arabic. The stabiliser is preferably provided in an amount of from 0.625wt%-1.0wt% of the concentrate.

The liquid dairy concentrate may contain salt. Salt is preferably provided in an amount of from 0.8wt%-1.4wt% of the concentrate. The liquid dairy concentrate may contain vitamin or mineral supplements. Vitamin or mineral supplements are preferably provided in an amount of from 0-2.5wt%, more preferably from 1.25wt%-2.5wt% of the concentrate. The liquid dairy concentrate may contain up to 1 wt% of other flavourings.

The liquid dairy concentrate may contain sugar (including any added sucrose as discussed herein). The sugar is preferably provided in an amount of from 12.5wt%-36wt% of the concentrate, preferably about 25wt%.

Preferably the step of adding one or more further ingredients to the modified retentate to form a liquid dairy concentrate is conducted at a temperature of at least 70°C, preferably from 75 to 79°C. The addition of the further ingredients at an elevated temperature helps to reduce the risk of butter formation. It was found that hot mixing at a temperature of at least 70°C provided support for the fat globule membranes of the fat particles, resulting in less free fat release and limiting butter formation during storage. Even a comparison of 50°C versus 60°C indicated that an increase of 10°C can help prevent free fat release in this matrix.

Preferably the step of adding one or more further ingredients to the modified retentate to form a liquid dairy concentrate further comprises homogenising the liquid dairy concentrate, preferably a two-stage high-pressure homogenisation.

Homogenisation is a process used to ensure the homogeneity of two immiscible liquids. It is well known to homogenise dairy compositions to ensure that the fat content is evenly distributed in the aqueous portion of the composition. Homogenisation breaks the fat into smaller sizes so it no longer separates, allowing the sale of non-separating milk at any fat specification. Homogenisation is preferably a two-step high pressure process, such as a first step at from 100 to 300 Bar (preferably about 170-270 Bar) and a second step at from 10 to 60 Bar (preferably about 40 Bar).

The liquid dairy concentrate is then cooled to at most 8°C (preferably in the range of from 5 to 8°C). As will be appreciated, filling a plurality of small containers with a liquid dairy concentrate is time consuming and the bulk of the concentrate will need to be held until it can be used. It has been found that it is necessary for the concentrate to be cooled to reduce the risk of the concentrate forming a butter.

Preferably the liquid dairy concentrate is stored after cooling and before filling at a temperature of at most 8°C (preferably in the range of from 5 to 8°C) for at least 2 minutes and, preferably, for less than 24 hours. Preferably the concentrate is stored for at least 2 minutes, preferably at least 30 minutes, preferably at least 1 hour, and preferably for at most 72 hours, more preferably at most 24 hours, even more preferably at most 12 hours.

The cooled dairy concentrate is then filled into a beverage container. Preferably the beverage container is a capsule for use in a beverage preparation machine. Such capsules are well known in the art and may also be referred to a cartridges or pods, for example. They are typically made of plastic and/or a foil, and are provided to the customer in a sealed form for single serving preparation. Alternatively, the beverage container may be a multi-serving beverage container, such as a bottle or a reservoir for a vending machine. Such containers are well known in the art.

Once the cooled dairy concentrate has been filled into the beverage container it is sealed. This will typically involve the application or adhesion of a lid or seal over a filling inlet.

The liquid dairy concentrate in the sealed container is then retorted in the beverage container. Retorting is a well-known process in the art and includes pasteurisation and sterilisation. It involves heating a food composition to a specific temperature for a predefined length of time and then immediately cooling it after it is removed from the heat. This process slows spoilage caused by microbial growth in the food. Preferably the method used is sterilisation, intended to kill all micro-organisms in the food.

Preferably the method is of producing two or more liquid dairy concentrates having different flavours, wherein, in the step of adding one or more further ingredients to the modified retentate to form a liquid dairy concentrate, two or more portions of the modified retentate are treated separately to obtain liquid dairy concentrates with different flavours, wherein the liquid dairy concentrates are then separately subjected to the cooling, filling, sealing and retorting steps.

According to a further aspect there is provided a sealed beverage container containing a liquid dairy concentrate obtainable by the method described herein. Preferably the container is a beverage capsule containing the liquid dairy concentrate as described herein and, optionally, means for foaming. Beverage capsules are well known in the art and any design suitable for holding a liquid ingredient may be employed. Preferably the means for foaming is an eductor.

According to a further aspect there is provided a method of preparing a beverage, the method comprising introducing water into the sealed beverage container described herein to dilute the liquid dairy concentrate to form a beverage and dispensing the beverage from the container.

The present application provides, in particular, an improvement over the method of WO-A-2015170164. As will be appreciated, the objective of the present application is to provide substantially the same recipes as WO-A-2015170164 with similar flavours. However, the inventors have found that a small change to the process provides a number of clear advantages which improve handling and processing, while achieving a reduced lactose content in the intermediate slurry and, hence, an improved flavour in the final product.

The addition of microfiltered milk after the cream concentration and dia-filtration, as disclosed in this earlier application introduces an amount of lactose. This is because micro-filtered milk (MF) is not lactose-reduced. This reintroduction of lactose is undesirable since it increases the risk of Maillard reaction in subsequent steps and leads to a cooked flavour in the final concentrate.

The inventors have found that the mixing of the microfiltered milk with the cream before the concentration step reduces the overall lactose content of the cream and MF concentrate. This is because it is lost in the ultrafiltration and/or diafiltration steps to the permeate. This helps to reduce the likelihood of undesirable browning occurring and improves the flavour. In an exemplary concentrate made by the method of WO-A-2015170164 and the method disclosed herein, it was possible to reduce the lactose content of the final product from about 1.06% down to 0.74% with this simple change. In this example, the ultrafiltration removed substantially all of the lactose, but some was then returned with the dairy mineral component of the recipe. As will be appreciated, a lactose free composition could be achieved with alternative mineral fortification.

Surprisingly the addition of the MF before concentration has a number of further benefits. In particular, the retentate following ultrafiltration and/or diafiltration is easier to handle since it has a lower level of total solids and fat. For example, compared to the method of WO-A-2015170164, while still producing the same target product, the total solids of the retentate can be decreased from 50% to 43.9%, the level of fat can decrease from 46% to 39%, and the protein content can rise from 2.2% to 3.4%, in an exemplary comparison. That is, when producing a final product with the same levels of fat and protein, the addition of the MF milk earlier in the process means that the intermediate compositions have a lower total solids and a lower viscosity.

Similarly, the slurry is easier to handle and is even less prone to buttering due to the reduced total solids and the reduced fat content.

As a further benefit, the mixing of cream and MF before concentration facilitates adjustment of the F/P ratio of the infeed to a fixed value. Adjustment of the MF and cream ratios can then be used to correct for seasonal changes.

Preferably substantially no further ingredients are added to the liquid dairy concentrate between homogenising and filing the liquid dairy concentrate into a beverage capsule. As will be appreciated, small amounts of ingredients, such as flavourings, especially liquid flavourings, may be added at this point, such as less than 1wt% of the concentrate. Avoiding significant further additions prevents the risk of further additives encouraging the formation of butter. It was found that the provision of the homogeniser as a final step in the process, rather than an initial step before the addition of further ingredients to form a beverage concentrate, served to provide the best product taste and texture quality. Furthermore, the results of a variety of trials indicated that homogenization, especially hot homogenisation, downstream in the process is the ideal unit operation to produce the highest quality finished products while allowing the greatest flexibility in storage of the process if so desired, without the production of butter in the storage tank. That is, if it is necessary to store the homogenised product, it remains stable. If the dairy ingredient is pre-homogenised before the addition of the further ingredients, this benefit is compromised.

In traditional processes, it was known to homogenise the concentrated dairy ingredient after ultrafiltration. However, when moving from milk-based ingredients to higher fat cream-based ingredients, the inventors found that this approach led to butter formation during storage.

In particular, the inventors have found that when preparing a concentrated liquid dairy concentrate from a highly concentrated dairy fat source, there is a risk that the fat globule membranes may be destroyed and consequently free fat may be released. This is the initiation of butter development which, during storage, may render the concentrate unusable.

The inventors have found that it is possible to provide a concentrate sourced from a highly concentrated dairy fat source which when processed in a specific manner prohibits the destruction of fat globule membranes and consequently the release of free fat. Furthermore, the inventors found that it was possible to achieve this aim while allowing the intermediate products to be stored without forming butter.

As will be appreciated, the process described herein involves a number of sequential process steps which may be conducted at different temperatures. In order to move the retentate between these temperatures it is preferred to use a heat exchanger. Preferably the temperature changes are made as quickly as feasible in view of the bulk amount of retentate being processed, and preferably each heating or cooling step is conducted in less than 10 minutes, more preferably less than 5 minutes and preferably less than 1 minute for each individual portion of the retentate being handled.

According to a preferred example of the method, a liquid dairy concentrate is manufactured in the following steps:
- Cream is provided and pasteurised, then cooled and buffered.
- MF milk is provided.
- The cream and MF milk are mixed and then heated above 50°C and subjected to ultrafiltration and diafiltration.
- Sugar is added to the concentrated cream to form a slurry.
- The slurry is cooled to less than 8°C for at least 30 minutes, then heated to above 70°C.
- Powder ingredients are then added including minerals.
- The processed dairy liquid is then homogenised in a two-step process at 220 and 40 Bar, then cooled below 8°C for filling into beverage cartridges.
- The filled and sealed beverage cartridges are then passed to a retort for pasteurisation.

The powder ingredient additions include:
Sucrose
Dairy Minerals (Blend with higher Calcium)
Gum Arabic (Hydrocolloid)
Sodium Chloride
Natural Flavors (not in all formulations)
Trisodium Citrate

The final product has a total solids of from 45 to 65wt%, preferably 50-59wt%; a fat content of 12 to 30wt%, preferably 15-25wt%; and a protein content of from 1 to 5wt%, preferably 1.5-4%.

The salt is present in an amount of from 0.5 to 2wt%, preferably 1 to 1.5wt%; the sugar from 7 to 15wt%, preferably 9 to 13wt%; the added minerals in an amount of from 1 to 3wt%, preferably 1.5 to 2.5wt% (resulting in a calcium level in the finished product of 0.35 to 0.55wt%); trisodium citrate in an amount of from 0.1 to 0.5wt%, preferably 0.2 to 0.4wt%; and gum arabic in an amount of from 0.25 to 1.5wt%, preferably 0.5 to 1wt%.

Lactose in the final product are typically from 0wt% to 1wt%, preferably 0.25 to 1wt%, more preferably 0.5 to 0.8wt%.

All of the above ingredient ranges are contemplated individually as well as in combinations with the other listed ingredients. All percentages are by weight unless otherwise specified.

The invention will now be described in relation to the following non-limiting figures, in which:

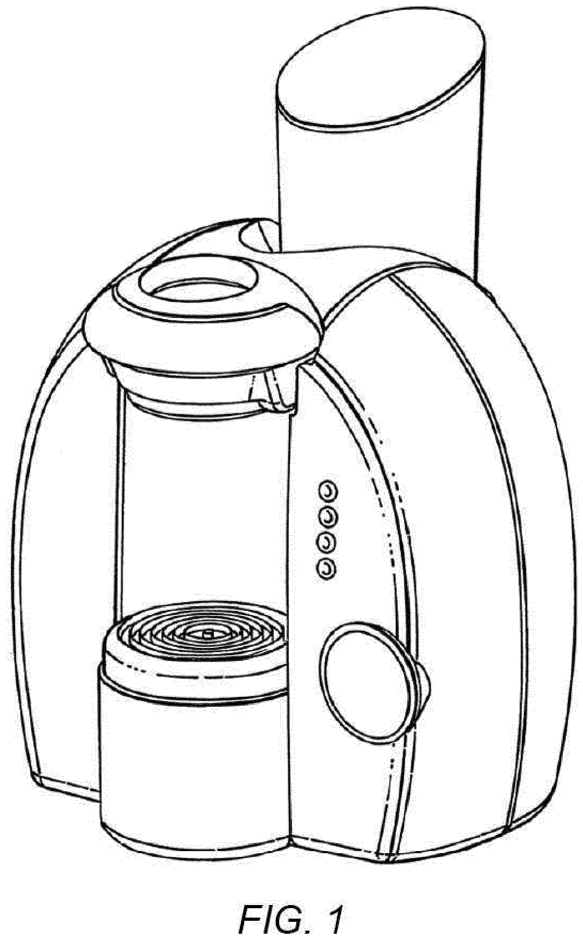

Figure 1 shows a coffee beverage preparation system (1).
Figure 2 shows an example of the process steps of a prior art method.
Figure 3 shows an example of the process steps of the prior art method of WO-A-2015170164.
Figure 4 shows an example of the process steps according to the method described herein.

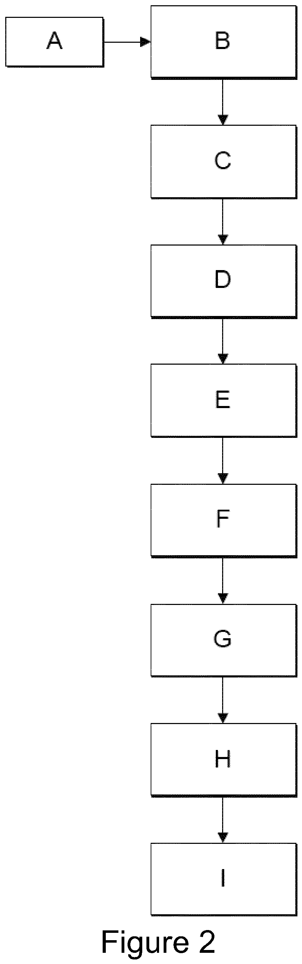

In Figure 2, the flow chart boxes are as follows:
A - supply of milk
B - Ultrafiltration processing
C - Homogenisation (2 stage)
D - Cooling to less than 12°C
E - Storage for less than 72 Hours at less than 8°C
F - A mixing step for adding water, salt and stabilisers (Etc.)
G - Storage for less than 12 Hours at less than 12°C
H - Capsule filling
I - Pasteurisation at 124°C for 13 minutes

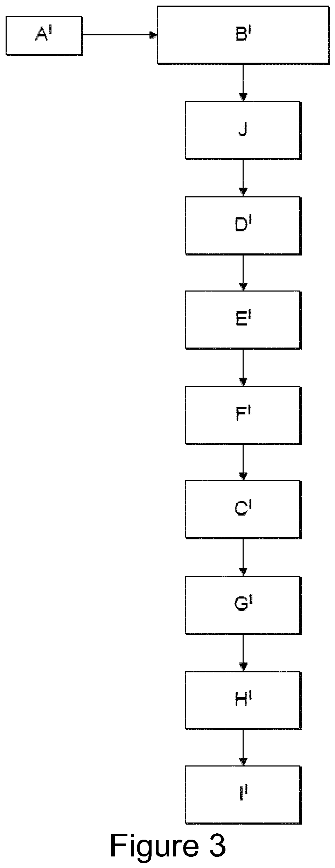

In Figure 3, the flow chart boxes are as follows (like reference numerals have been used for clarity):
A' - supply of cream with about 40% fat
B' - Ultrafiltration and diafiltration processing, with the removal of lactose.

Step B' results in a concentrate having about 50% solids, 2-3% protein, 44%₊ fat and less than 1% lactose.

After step B', sucrose is added in step J.
D' - Cooling to less than 12°C
E' - Storage for less than 72 Hours at less than 8°C
F' - A mixing step for adding water, salt and casein (Etc.)
C' - Homogenisation (2 stage)
G' - Storage for less than 12 Hours at less than 12°C
H' - Capsule filling
I' - Pasteurisation at 124°C for 13 minutes

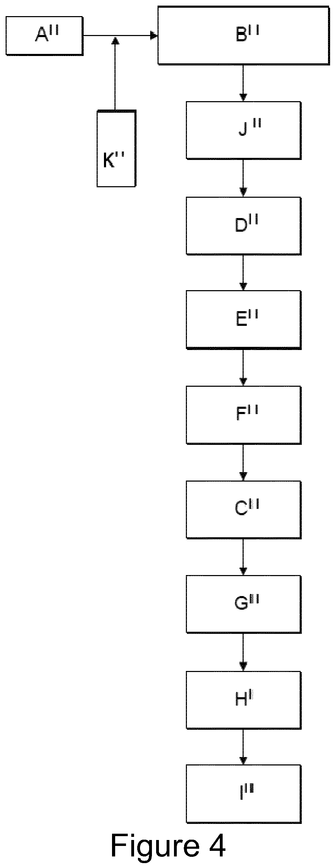

In Figure 4, the flow chart boxes are as follows (like reference numerals have been used for clarity):
A" - supply of cream with about 40% fat
K" - supply of MF milk and mixing with the cream to a desired F/P ratio
B" - Ultrafiltration and diafiltration processing, with the removal of lactose.
J" - Adding sucrose
D" - Cooling to less than 8°C
E" - Storage for less than 72 Hours at less than 8°C
F" - A mixing step for adding water, salt and flavours (Etc.)
C" - Homogenisation (2 stage)
G" - Storage for less than 12 Hours at less than 12°C
H" - Capsule filling and sealing
I" - Sterilisation at 124°C for 13 minutes

### Examples

The invention will now be described in relation to the following non-limiting examples.

### Example 1

A cream-based concentrate was prepared and filled into beverage capsules. The concentrate was then sterilized. The recipe for the trial formulation was as follows:

| **Ingredient** | **Wt%** |
|---|---|
| Ultrafiltrated and diafiltrated cream/MF concentrate | 58.415 |
| Salt-Sodium Chloride | 1.173 |
| Sugar, Fine, Category 2 | 25.51 |
| DAIRY MINERALS | 1.531 |
| STABILISER | 0.663 |
| Trisodium Citrate Dihydrate | 0.187 |
| Water | 12.52 |
| **Total** | **100.0** |

The composition of Example 1 was produced as follows. A cream ingredient having a fat content of about 40wt% was blended with a Casein Enriched Skim Milk concentrate and subjected to ultrafiltration and diafiltration to achieve a total solids of approximately 50wt% and a low lactose content. These filtration steps were conducted at approximately 50°C.

The retentate was stored at 8°C for up to 72 hours. The retentate was then mixed in a mixer with powders according to above formulas at 73°C for a minimum mixing time of at least 7 minutes.

The mixture was then passed to a homogenizer and maintained at 73°C. It was homogenised at 200/20 bar in the 2 stages.

The mixture was then cooled and filled into beverage capsules at a temperature of 73°C < x < 50°C at 26.0g fill weights. The closed capsules were then retorted at 126°C for 13 minutes.

As demonstrated in this Example, with reference to Comparative Examples 1 and 2 (below), the inclusion of the microfiltered milk before the concentration step reduced the final lactose content and led to a fresher taste with lower cooked flavours.

### Comparative Example 1

A cream-based concentrates were prepared in accordance with the method of WO-A-2015170164 and filled into beverage capsules. The concentrate was then pasteurised. The recipes for the trial formulation was as follows:

| **Ingredient** | **Wt%** |
|---|---|
| Ultrafiltrated and diafiltrated cream concentrate | 37.43 |
| Salt-Sodium Chloride | 1.2 |
| Sugar, Fine, Category 2 | 17.0 |
| DAIRY MINERALS | 2.2 |
| STABILISER | 0.88 |
| Trisodium Citrate Dihydrate | 0.175 |
| Flavouring | 0.1 |
| Casein Enriched Skim Milk concentrate | 10 |
| Water | 31.03 |
| **Total** | **100.0** |

The composition of Comparative Example 1 was produced as follows. A cream ingredient having a fat content of about 40wt% was subjected to ultrafiltration and diafiltration to achieve a total solids of approximately 50wt% and a low lactose content. These filtration steps were conducted at approximately 50°C.

The retentate was stored at 60°C for up to 6 hours. The retentate was then mixed in a mixer with powders and flavour according to above formulas at 65°C for a minimum mixing time of at least 7 minutes.

The mixture was then passed to a homogenizer and maintained at 65°C. It was homogenised at 142/20 bar in the 2 stages.

The mixture was then cooled to <10°C in a wide gap plate and frame heat exchangers, and then filled into beverage capsules at a temperature of 5°C < x < 10°C at 26.5g fill weights. The closed capsules were then retorted at 124°C for 11 to 14 minutes.

### Comparative Example 2

A cream-based concentrates were prepared in accordance with the method of WO-A-2015170164 and filled into beverage capsules. The concentrate was then pasteurised. The recipes for the trial formulation was as follows:

| **Ingredient** | **Wt%** |
|---|---|
| Ultrafiltrated and diafiltrated cream concentrate | 56.6 |
| Salt-Sodium Chloride | 1 |
| Sugar, Fine, Category 2 | 25 |
| DAIRY MINERALS | 1.5 |
| STABILISER | 0.65 |
| Trisodium Citrate Dihydrate | 0.242 |
| Casein Enriched Skim Milk concentrate | 15 |
| Water | 0 |
| **Total** | **100.0** |

The composition of Comparative Example 2 was produced as follows. A cream ingredient having a fat content of about 40wt% was subjected to ultrafiltration and diafiltration to achieve a total solids of approximately 50wt% and a low lactose content. These filtration steps were conducted at approximately 50°C.

The retentate was then mixed with the sugar and trisodium citrate and cooled to a temperature of less than 8°C for up to 72 hours.

The retentate was then reheated and mixed in a mixer with the remaining powders and flavour according to above formulas at 65°C for a minimum mixing time of at least 7 minutes.

The mixture was then passed to a homogenizer and maintained at 65°C. It was homogenised at 142/20 bar in the 2 stages.

The mixture was then cooled to <10°C in a wide gap plate and frame heat exchangers, and then filled into beverage capsules at a temperature of 5°C < x < 10°C at 26.5g fill weights. The closed capsules were then retorted at 124°C for 11 to 14 minutes.

### Comparative Example 3

The composition was produced as follows. A cream ingredient having a fat content of about 40wt% was subjected to ultrafiltration and diafiltration to achieve a total solids of approximately 50wt% and a low lactose content. These filtration steps were conducted at approximately 50°C.

The retentate was supplemented with microfiltrated milk concentrate and then passed to a homogenizer and maintained at 65°C. It was homogenised at 142/20 bar in the 2 stages.

The homogenised retentate was stored at 8°C for 72 hours.

The retentate was then to be mixed in a mixer with powders and flavourings. However, the concentrate had formed a butter during storage.

### Comparative Example 4

The composition was produced as follows. A cream ingredient having a fat content of about 40wt% was subjected to ultrafiltration and diafiltration to achieve a total solids of approximately 50wt% and a low lactose content. These filtration steps were conducted at approximately 50°C.

The retentate was passed to a homogenizer and maintained at 65°C. It was homogenised at 142/20 bar in the 2 stages.

The homogenised retentate was stored at 8°C for 72 hours.

The retentate was then to be mixed in a mixer with powders and flavourings. However, the concentrate had formed a butter during storage.

### Comparative Example 5

The composition was produced as follows. A cream ingredient having a fat content of about 40wt% was subjected to ultrafiltration and diafiltration to achieve a total solids of approximately 50wt% and a low lactose content. These filtration steps were conducted at approximately 50°C.

The retentate was then mixed with the sugar (sucrose) and trisodium citrate and cooled to a temperature of less than 8°C for up to 72 hours.

The retentate was then mixed (at 50°C) in a mixer with the remaining powders and flavour according to above formulas for a minimum mixing time of at least 7 minutes.

The mixture was then passed to a homogenizer. It was homogenised at 142/20 bar in the 2 stages.

The mixture was then cooled to <10°C in a wide gap plate and frame heat exchangers, and then filled into beverage capsules at a temperature of 5°C < x < 10°C at 26.5g fill weights. The closed capsules were then retorted at 124°C for 11 to 14 minutes.

In this example, some failure was seen in the process as the finished goods were slightly darker and more coffee intense.

Although preferred embodiments of the invention have been described herein in detail, it will be understood by those skilled in the art that variations may be made thereto without departing from the scope of the invention or of the appended claims.

## Claims

1. A method of producing a retorted liquid dairy concentrate in a sealed beverage container, the method comprising:
mixing cream and micro-filtered milk to form a liquid dairy ingredient consisting of the cream and the micro-filtered milk and having a total solids content of up to 55wt%, wherein the liquid dairy ingredient has a fat content of between 35 to 45wt% and a fat to protein ratio of from 5:1 to 15:1 by weight,
concentrating the liquid dairy ingredient by ultrafiltration to obtain a concentrated liquid dairy ingredient as a retentate;
adding sucrose and/or trisodium citrate to form a modified retentate;
adding one or more further ingredients to the modified retentate to form a liquid dairy concentrate;
cooling the liquid dairy concentrate to at most 8°C,
filling the cooled liquid dairy concentrate into a beverage container, and
sealing and retorting the liquid dairy concentrate in the beverage container,
wherein after adding sucrose and/or trisodium citrate to form a modified retentate and before adding one or more further ingredients to the modified retentate to form a liquid dairy concentrate, the modified retentate is cooled to a temperature of at most 8°C, and
wherein the modified retentate is stored at a temperature of at most 8°C for at least 2 minutes.

2. The method according to claim 1, wherein the method comprises concentrating the liquid dairy ingredient by ultrafiltration and diafiltration to obtain a concentrated liquid dairy ingredient as a retentate.

3. A method according to claim 1 or claim 2, wherein the liquid dairy ingredient has a fat to protein ratio of from 8:1 to 12:1 , and preferably about 10:1.

4. A method according to any of the preceding claims, wherein the step of concentrating the liquid dairy ingredient by ultrafiltration and, optionally, diafiltration, and/or the step of adding sucrose and/or trisodium citrate to form a modified retentate, is conducted at a temperature of at least 50°C, preferably from 50 to 55°C.

5. A method according to any of the preceding claims, wherein the step of adding one or more further ingredients to the modified retentate to form a liquid dairy concentrate is conducted at a temperature of at least 70°C, preferably from 75 to 79°C.

6. The method according to any of the preceding claims, wherein the liquid dairy concentrate is stored after cooling and before filling at a temperature of at most 8°C for at least 2 minutes and, preferably, for less than 24 hours.

7. A method according to claim 1 of producing two or more retorted liquid dairy concentrates having different flavours in sealed beverage containers,
wherein, in the step of adding one or more further ingredients to the modified retentate to form a liquid dairy concentrate, two or more portions of the modified retentate are treated separately to obtain liquid dairy concentrates with different flavours, wherein the liquid dairy concentrates are then separately subjected to the cooling, filling, sealing and retorting steps.

8. The method according to any of the preceding claims, wherein the modified retentate is stored at a temperature of at most 8 °C for less than 24 hours.

9. A method according to any of the preceding claims, wherein the beverage container is a capsule for use in a beverage preparation machine.

10. The method according to any of the preceding claims, wherein the one or more further ingredients are selected from buffers, stabilisers, flavourings, minerals and casein.

11. The method according to any of the preceding claims, wherein the step of adding one or more further ingredients to the modified retentate to form a liquid dairy concentrate further comprises homogenising the liquid dairy concentrate, preferably a two-stage high-pressure homogenisation.

12. The method according to any of the preceding claims, wherein the retentate has from 40 to 50wt% solids, and/or at least 38wt% fat and/or less than 1wt% lactose.

13. The method according to any of the preceding claims, wherein sucrose is added, preferably in granulated form, in an amount of from 10 to 40wt%.

14. A method of preparing a beverage, the method comprising:
producing a retorted liquid dairy concentrate in a sealed beverage container by the method of any preceding claim,
introducing water into the sealed beverage container to dilute the liquid dairy concentrate to form a beverage, and
dispensing the beverage from the container.

## Patentansprüche

1. Verfahren zum Herstellen eines retortierten flüssigen Milchkonzentrats in einem versiegelten Getränkebehälter, das Verfahren umfassend:
Mischen von Sahne und mikrofiltrierter Milch, um einen flüssigen Milchinhaltsstoff zu bilden, der aus der Sahne und der mikrofiltrierten Milch besteht und einen Gesamtfeststoffgehalt von bis zu 55 Gew.-% aufweist, wobei der flüssige Milchinhaltsstoff einen Fettgehalt zwischen 35 bis 45 Gew.-% und ein Gewichtsverhältnis von Fett zu Protein von 5 : 1 bis 15 : 1 aufweist,
Konzentrieren des flüssigen Milchinhaltsstoffs durch Ultrafiltration, um einen konzentrierten flüssigen Milchinhaltsstoff als ein Retentat zu erhalten;
Zugeben von Saccharose und/oder Trinatriumcitrat, um ein modifiziertes Retentat zu bilden;
Zugeben eines oder mehrerer weiterer Inhaltsstoffe zu dem modifizierten Retentat, um ein flüssiges Milchkonzentrat zu bilden;
Abkühlen des flüssigen Milchkonzentrats auf höchstens 8 °C,
Füllen des gekühlten flüssigen Milchkonzentrats in einen Getränkebehälter, und
Versiegeln und Retortieren des flüssigen Milchkonzentrats in dem Getränkebehälter,
wobei nach dem Zugeben von Saccharose und/oder Trinatriumcitrat, um ein modifiziertes Retentat zu bilden, und vor dem Zugeben eines oder mehrerer weiterer Inhaltsstoffe zu dem modifizierten Retentat, um ein flüssiges Milchkonzentrat zu bilden, das modifizierte Retentat auf eine Temperatur von höchstens 8 °C abgekühlt wird, und
wobei das modifizierte Retentat mindestens 2 Minuten lang bei einer Temperatur von höchstens 8 °C gelagert wird.

2. Verfahren nach Anspruch 1, wobei das Verfahren das Konzentrieren des flüssigen Milchinhaltsstoffs durch Ultrafiltration und Diafiltration umfasst, um einen konzentrierten flüssigen Milchinhaltsstoff als ein Retentat zu erhalten.

3. Verfahren nach Anspruch 1 oder Anspruch 2, wobei der flüssige Milchinhaltsstoff ein Verhältnis von Fett zu Protein von 8 : 1 bis 12 : 1 und vorzugsweise etwa 10 : 1 aufweist.

4. Verfahren nach einem der vorstehenden Ansprüche, wobei der Schritt des Konzentrierens des flüssigen Milchinhaltsstoffs durch Ultrafiltration und wahlweise Diafiltration und/oder der Schritt des Zugebens von Saccharose und/oder Trinatriumcitrat, um ein modifiziertes Retentat zu bilden, bei einer Temperatur von mindestens 50 °C, vorzugsweise von 50 bis 55 °C durchgeführt wird.

5. Verfahren nach einem der vorstehenden Ansprüche, wobei der Schritt des Zugebens eines oder mehrerer weiterer Inhaltsstoffe zu dem modifizierten Retentat, um ein flüssiges Milchkonzentrat zu bilden, bei einer Temperatur von mindestens 70 °C, vorzugsweise von 75 bis 79 °C durchgeführt wird.

6. Verfahren nach einem der vorstehenden Ansprüche, wobei das flüssige Milchkonzentrat nach dem Abkühlen und vor dem Füllen mindestens 2 Minuten lang und vorzugsweise weniger als 24 Stunden lang bei einer Temperatur von höchstens 8 °C gelagert wird.

7. Verfahren nach Anspruch 1 zum Herstellen von zwei oder mehr retortierten flüssigen Milchkonzentraten, die unterschiedliche Aromen aufweisen, in versiegelten Getränkebehältern,
wobei bei dem Schritt des Zugebens eines oder mehrerer weiterer Inhaltsstoffe zu dem modifizierten Retentat, um ein flüssiges Milchkonzentrat zu bilden, zwei oder mehr Abschnitte des modifizierten Retentats separat behandelt werden, um flüssige Milchkonzentrate mit unterschiedlichen Aromen zu erhalten, wobei die flüssigen Milchkonzentrate dann separat den Schritten des Kühlens, Füllens, Versiegelns und Retortierens unterzogen werden.

8. Verfahren nach einem der vorstehenden Ansprüche, wobei das modifizierte Retentat weniger als 24 Stunden lang bei einer Temperatur von höchstens 8 °C gelagert wird.

9. Verfahren nach einem der vorstehenden Ansprüche, wobei der Getränkebehälter eine Kapsel zur Verwendung in einer Getränkezubereitungsmaschine ist.

10. Verfahren nach einem der vorstehenden Ansprüche, wobei der eine oder die mehreren weiteren Inhaltsstoffe aus Puffern, Stabilisatoren, Aromastoffen, Mineralien und Casein ausgewählt sind.

11. Verfahren nach einem der vorstehenden Ansprüche, wobei der Schritt des Zugebens eines oder mehrerer weiterer Inhaltsstoffe zu dem modifizierten Retentat, um ein flüssiges Milchkonzentrat zu bilden, ferner ein Homogenisieren des flüssigen Milchkonzentrats, vorzugsweise eine zweistufige Hochdruckhomogenisierung, umfasst.

12. Verfahren nach einem der vorstehenden Ansprüche, wobei das Retentat von 40 bis 50 Gew.-% Feststoffe und/oder mindestens 38 Gew.-% Fett und/oder weniger als 1 Gew.-% Lactose aufweist.

13. Verfahren nach einem der vorstehenden Ansprüche, wobei Saccharose, vorzugsweise in granulierter Form, in einer Menge von 10 bis 40 Gew.-% zugegeben wird.

14. Verfahren zum Zubereiten eines Getränks, das Verfahren umfassend:
Herstellen eines retortierten flüssigen Milchkonzentrats in einem versiegelten Getränkebehälter durch das Verfahren nach einem der vorstehenden Ansprüche,
Einführen von Wasser in den versiegelten Getränkebehälter, um das flüssige Milchkonzentrat zu verdünnen, um ein Getränk zu bilden, und
Abgeben des Getränks aus dem Behälter.

## Revendications

1. Procédé de production d'un concentré laitier liquide autoclavé, dans un récipient à boisson scellé, le procédé comprenant :
le mélange de crème et de lait micro-filtré pour former un ingrédient laitier liquide constitué de la crème et du lait micro-filtré et ayant une teneur totale en solides allant jusqu'à 55 % en poids, dans lequel l'ingrédient laitier liquide a une teneur en matières grasses comprise de 35 à 45 % en poids et un rapport des matières grasses aux protéines allant de 5:1 à 15:1 en poids,
la concentration de l'ingrédient laitier liquide par ultrafiltration pour obtenir un ingrédient laitier liquide concentré en tant que rétentat ;
l'ajout de saccharose et/ou de citrate trisodique pour former un rétentat modifié ;
l'ajout d'un ou plusieurs ingrédients supplémentaires au rétentat modifié pour former un concentré laitier liquide ;
le refroidissement du concentré laitier liquide jusqu'à au plus 8 °C,
le remplissage du concentré laitier liquide refroidi dans un récipient à boisson, et
le scellage et l'autoclavage du concentré laitier liquide dans le récipient à boisson,
dans lequel après l'ajout de saccharose et/ou de citrate trisodique pour former un rétentat modifié et avant l'ajout d'un ou plusieurs ingrédients supplémentaires au rétentat modifié pour former un concentré laitier liquide, le rétentat modifié est refroidi jusqu'à une température d'au plus 8 °C, et
dans lequel le rétentat modifié est stocké à une température d'au plus 8 °C pendant au moins 2 minutes.

2. Procédé selon la revendication 1, dans lequel le procédé comprend la concentration de l'ingrédient laitier liquide par ultrafiltration et diafiltration pour obtenir un ingrédient laitier liquide concentré en tant que rétentat.

3. Procédé selon la revendication 1 ou la revendication 2, dans lequel l'ingrédient laitier liquide a un rapport des matières grasses aux protéines allant de 8:1 à 12:1, et de préférence d'environ 10:1.

4. Procédé selon l'une quelconque des revendications précédentes, dans lequel l'étape de concentration de l'ingrédient laitier liquide par ultrafiltration et, facultativement, diafiltration, et/ou l'étape d'ajout de saccharose et/ou de citrate trisodique pour former un rétentat modifié, sont effectuées à une température d'au moins 50 °C, de préférence de 50 à 55 °C.

5. Procédé selon l'une quelconque des revendications précédentes, dans lequel l'étape d'ajout d'un ou plusieurs ingrédients supplémentaires au rétentat modifié pour former un concentré laitier liquide est effectuée à une température d'au moins 70 °C, de préférence de 75 à 79 °C.

6. Procédé selon l'une quelconque des revendications précédentes, dans lequel le concentré laitier liquide est stocké après refroidissement et avant remplissage à une température d'au plus 8 °C pendant au moins 2 minutes et, de préférence, pendant moins de 24 heures.

7. Procédé selon la revendication 1 de production de deux concentrés laitiers liquides autoclavés ou plus ayant des arômes différents dans des récipients à boisson scellés,
dans lequel, dans l'étape d'ajout d'un ou plusieurs ingrédients supplémentaires au rétentat modifié pour former un concentré laitier liquide, deux parties ou plus du rétentat modifié sont traitées séparément pour obtenir des concentrés laitiers liquides avec des arômes différents, les concentrés laitiers liquides étant ensuite soumis séparément aux étapes de refroidissement, remplissage, scellage et autoclavage.

8. Procédé selon l'une quelconque des revendications précédentes, dans lequel le rétentat modifié est stocké à une température d'au plus 8 °C pendant moins de 24 heures.

9. Procédé selon l'une quelconque des revendications précédentes, dans lequel le récipient à boisson est une capsule pour utilisation dans une machine de préparation de boisson.

10. Procédé selon l'une quelconque des revendications précédentes, dans lequel le ou les ingrédients supplémentaires sont choisis parmi tampons, stabilisants, arômes, minéraux et caséine.

11. Procédé selon l'une quelconque des revendications précédentes, dans lequel l'étape d'ajout d'un ou plusieurs ingrédients supplémentaires au rétentat modifié pour former un concentré laitier liquide comprend en outre l'homogénéisation du concentré laitier liquide, de préférence une homogénéisation à haute pression en deux étapes.

12. Procédé selon l'une quelconque des revendications précédentes, dans lequel le rétentat a de 40 à 50 % en poids de solides, et/ou au moins 38 % en poids de matière grasse et/ou moins de 1 % en poids de lactose.

13. Procédé selon l'une quelconque des revendications précédentes, dans lequel du saccharose est ajouté, de préférence sous forme de granulés, en une quantité allant de 10 à 40 % en poids.

14. Procédé de préparation d'une boisson, le procédé comprenant :
la production d'un concentré laitier liquide autoclavé, dans un récipient à boisson scellé par le procédé selon une quelconque revendication précédente,
l'introduction d'eau dans le récipient à boisson scellé pour diluer le concentré laitier liquide pour former une boisson, et
la distribution de la boisson à partir du récipient.
